# EUROPEAN PATENT SPECIFICATION

(11) **EP 3 872 540 B1**
(45) Date of publication and mention of the grant of the patent: **05.03.2025**
(21) Application number: 19937360.6
(22) Date of filing: 26.12.2019
(51) Int. Cl.: G02B 6/02

(54) **METHOD FOR FORMING OPTICAL FIBER**
HERSTELLUNGSVERFAHREN EINER OPTISCHEN FASER
PROCÉDÉ DE FORMATION D'UNE FIBRE OPTIQUE

(43) Date of publication of application: 01.09.2021
(73) Proprietor: Zhongtian Technology Fiber Potics Co., Ltd, Economic Development Zone Nantong City Jiangsu 226000 (CN); Jiangsu Zhongtian Technology Co., Ltd., Nantong, Jiangsu 226463 (CN); Jiangdong Science and Technology Co., Ltd, Rudong County Economic Development Zone Nantong Jiangsu 226400 (CN)
(72) Inventor: DING, Chunlai, Nantong City Jiangsu 226000 (CN); ZHU, Qiansheng, Nantong City Jiangsu 226000 (CN); CAO, Shanshan, Nantong City Jiangsu 226000 (CN); WANG, Zhen, Nantong City Jiangsu 226000 (CN); XU, Haitao, Nantong City Jiangsu 226000 (CN); YOU, Guanglei, Nantong City Jiangsu 226000 (CN); LIU, Zhizhong, Nantong City Jiangsu 226000 (CN); SU, Haiyan, Nantong City Jiangsu 226000 (CN); XUE, Chi, Nantong, Jiangsu 226463 (CN); XUE, Jiping, Jiangsu 226463 (CN)
(74) Representative: Zaboliene, Reda
(86) International application number: PCT/CN2019/128877
(87) International publication number: WO 2021/128213

(56) References cited:
- CN-A- 103 517 884
- CN-A- 103 543 491
- CN-Y- 200 962 153
- JP-A- 2002 060 238
- JP-A- H0 248 607
- JP-A- H0 570 184
- US-A- 4 848 869
- US-A- 5 668 908
- US-A1- 2014 199 040
- US-A1- 2017 010 411

## Description

### FIELD

The disclosure relates to optical fibers, and more particularly, to a method for forming an optical fiber.

### BACKGROUND

With the expansion of application environments of optical fibers and cables, ordinary optical fibers resistant only to a temperature of 85 degrees Celsius cannot be used in specific environments, such as aerospace, wind power, oil and gas exploration, and high-temperature industrial steam pipeline inspection. An optical fiber needs to maintain its transmission characteristics in these harsh environments, and higher requirements for optical performance, mechanical performance, and reliability of the optical fiber in these environments are thus demanded. An operating temperature of an optical fiber is directly determined by its coating material. At present, there are mainly four types of coating materials for the temperature-resistant optical fiber, that is, polyacrylate with high temperature resistance, organic silicone, polyimide, and metal. The optical fiber with the metallic coating can resist temperatures greater than 400 degrees Celsius, but there are few manufacturers and commercial applications. The optical fiber with the polyimide coating has the best temperature resistance among organic coatings, but its production process is relatively complicated, in that its drawing speed (2 to 20m/min) and production efficiency are very low. Since a modulus of polyimide is large, there is much attenuation of the optical fiber coated by the polyimide.

Optical fiber that can resist a temperature of 200 degrees Celsius is almost unknown. The problem is that the coating layer of the optical fiber resisting 200 degrees Celsius is solidified thermally and by ultraviolet (UV), however, the thermal solidification has a slow speed and is difficult to realize mass production. UV solidification has a higher efficiency, but the subsequent heating and wrapping steps make the process complicated. A conventional method for forming an optical fiber is known from D3 (JPH0248607A).

### SUMMARY

In view of the above shortcomings, a method for forming an optical fiber is needed. The invention is set out in the appended set of claims.

The present disclosure provides a method for forming optical fiber, including melting a fiber preform at 2000 degrees Celsius and above, and drawing the fiber preform into a filament. The filament is cooled to 45 to 55 degrees Celsius. An acrylic resin or an organic silicone resin is coated on the cooled filament, which is solidified by ultraviolet to obtain a primary coated filament. An organic silicone resin is coated on the primary coated filament, which is solidified by ultraviolet to obtain the optical fiber.

Furthermore, the acrylic resin has a viscosity of 2000 to 5000cps.

Furthermore, the organic silicone resin has a viscosity of 3000 to 8000cps.

Furthermore, a drawing speed during drawing the fiber preform is 200 to 600 m/min.

Furthermore, the solidifying by ultraviolet includes polymerizing ultraviolet-initiated resin onto the fiber preform to form a solid coating film that is insoluble and infusible, a time period for solidifying is 0.2 to 0.6s, and an outer diameter of the fiber preform is 40 to 200mm.

Furthermore, after drawing the fiber preform and before cooling, a diameter of the filament is checking for a preset diameter.

Furthermore, the optical fiber is coiled on an optical fiber tray through an automatic take-up device.

Furthermore, the optical fiber is formed by the method. The optical fiber formed by the method is example not encompassed by the wording of the claims. The optical fiber comprises, from inside to outside, a core layer, a cladding layer, an inner coating layer, and an organic silicon outer coating layer, the inner coating layer is an acrylic inner coating layer or an organic silicone inner coating layer.

Furthermore, the optical fiber is a single-mode or a multi-mode fiber.

Furthermore, the optical fiber is capable of long term use at 200 degrees Celsius, and being used for more than 7 days at 250 degrees Celsius.

Compared to existing technology, the optical fiber of the present disclosure is formed by two coating processes with the acrylic (or the organic silicon) and the organic silicon. The diameter of the optical fiber reaches 245µm. At 200 degrees Celsius, long term performance is stable. The optical fiber can also be used at 250 degrees Celsius for at least 7 days. The temperature-resistant optical fiber of the present disclosure has the screening strength of 100kpsi or 200kpsi. The coating layers are uniform. The segment length can be more than 50km, allowing long distance applications. The fatigue value Nd of the optical fiber is greater than 20.

### BRIEF DESCRIPTION OF THE DRAWING

Implementations of the disclosure will now be described, with reference to the drawings.
FIG. 1 is a flowchart of an embodiment of a method for forming an optical fiber.
FIG. 2 is a diagrammatic view of an embodiment of an optical fiber.

Description of names of main elements:
Core layer 101
Cladding layer 102
Inner coating layer 103
Organic silicon outer coating layer 104

Implementations of the disclosure will now be described, with reference to the drawing.

### DETAILED DESCRIPTION OF THE DISCLOSURE

Implementations of the disclosure will be described by way of embodiments. It should be noted that non-conflicting details and features in a plurality of embodiments of the present disclosure may be combined with each other.

The disclosure is illustrative only, and changes may be made in the detail within the principles of the present disclosure. It will, therefore, be appreciated that the embodiments may be modified within the scope of the claims.

The term "segment length" in the disclosure means a one-piece length of the entire optical fiber.

Unless otherwise defined, all technical terms used herein have the same meaning as commonly understood by one of ordinary skill in the art. The technical terms used herein are not to be considered as limiting the scope of the embodiments.

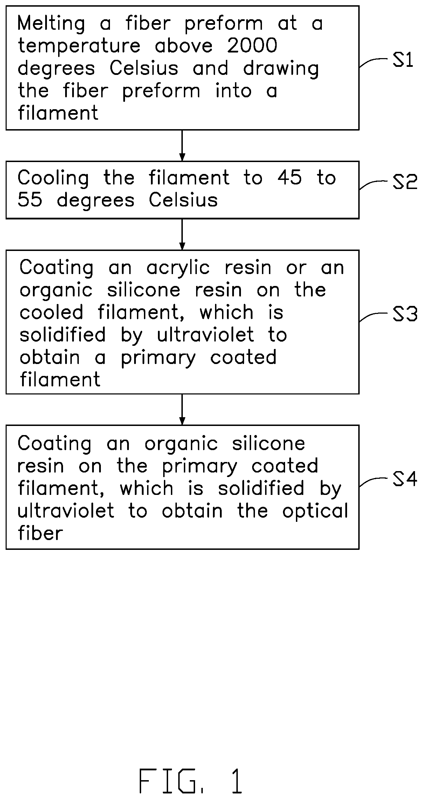

FIG. 1 illustrates a method for forming an optical fiber, including following steps.

Step S1, a fiber preform is melted at high temperatures of 2000 to 2200 degrees Celsius and drawn into a filament.

In an embodiment, a drawing speed for drawing the fiber preform is 200 to 500m/min. When the drawing speed is lower than 200m/min, the forming speed is slow, and a diameter of the cladding layer is difficult to control, which affects the optical performance. When the drawing speed is higher than 500m/min, a time period for solidifying can be reduced. However, the solidifying effect may be poor, the uniformity of the coating layer of the optical fiber is difficult to control, and the appearance of the optical fiber is poor. The performance of the optical fiber is also affected. An outer diameter of the fiber preform is 40 to 200mm.

Step S2, the filament is cooled to 45 to 55 degrees Celsius.

Step S3, the cooled filament is coated with acrylic resin or silicone resin, which is then solidified by ultraviolet to obtain a primary coated filament.

In an embodiment, a viscosity of the acrylic resin is 2000 to 5000cps, and a viscosity of the silicone resin is 3000 to 8000cps. The solidifying by ultraviolet includes polymerizing ultraviolet-initiated resin onto the fiber to form a solid coating film that is insoluble and infusible. A time period for solidifying is 0.2 to 0.6s. When the time period for solidifying is too short, insufficient solidification causes the fiber to be sticky and break during drawing. When the time period for solidifying is too long, over-solidification causes the optical fiber to be rigid and have a high attenuation.

Step S4, the primary coated filament is coated with a silicone resin, which is then solidified by ultraviolet to obtain the optical fiber.

In an embodiment, a viscosity of the silicone resin is 3000 to 8000cps. The solidifying by ultraviolet includes polymerizing ultraviolet-initiated resin onto the fiber to form a solid coating film that is insoluble and infusible. A time period for solidifying is 0.2 to 0.6s. When the time period for solidifying is too short, an insufficient solidification causes the fiber to be sticky and break during drawing. When the time period for solidifying is too long, an excessive solidification causes the optical fiber to be rigid and have a high attenuation.

The viscosity of the acrylic resin or the silicone resin cannot be too small, otherwise, the coating material may sag and the solidifying effect is not good. The viscosity cannot be too large. When the viscosity is too large, the fluidity will be poor and a heat treatment is needed. The heating temperature should not be too high. So when coated with resin of high viscosity, the adhesion is not good, and a long time period is required for solidification. Internal stress is likely to occur after the solidification, which is not conducive to the performance of the optical fiber, for example, signal attenuation may increase.

In an embodiment, the method can further include followings steps.

Step S12, after drawing the fiber preform at step S1 and before cooling the filament at step S2, a diameter of the filament is checked for being a preset diameter.

Step S5: after the optical fiber is formed, the optical fiber is coiled on an optical fiber tray through an automatic coiling device.

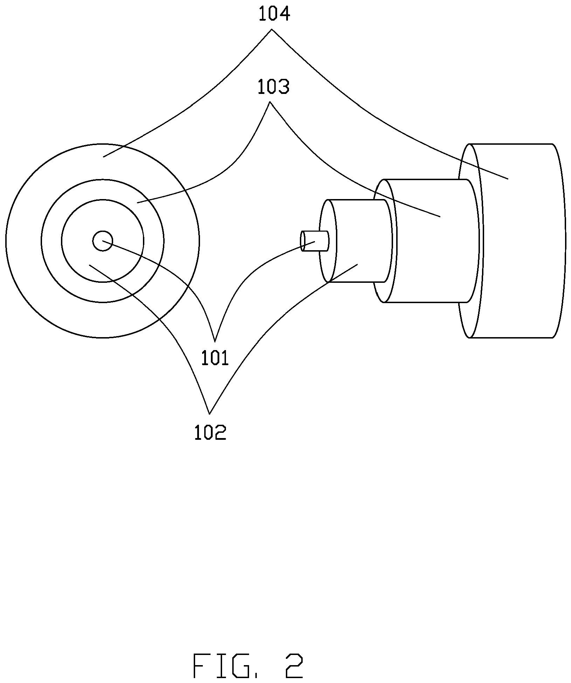

The optical fiber obtained by the above method includes, from inside to outside, a core layer 101, a cladding layer 102, an inner coating layer 103, and an organic silicon outer coating layer 104. The inner coating layer 103 includes an acrylic inner coating layer or an organic silicon inner coating layer. The optical fiber is a single-mode or a multi-mode optical fiber as shown in FIG. 2. The optical fiber can be used for a long time at 200 degrees Celsius, or for more than 7 days at 250 degrees Celsius. The existing method for forming the optical fiber with organic silicon coating has a high production cost, a low efficiency, and which needs a subsequent heat treatment. For the fiber of the present disclosure, the viscosity of the coating material is controlled, and the resulting optical fiber can resist temperatures of 200 to 250 degrees Celsius by two coatings and then the ultraviolet solidification. The forming process is simple and efficient. The optical fiber has low attenuation and good mechanical properties.

The following examples illustrate the method for forming the optical fiber of the present disclosure and the performance of the finished product.

### Example 1

A quartz fiber is a single-mode fiber having a structure of 9/125µm. The inner coating layer is an acrylic resin coating layer (the viscosity of the coating material is 2000-5000cps) resistant to high temperatures. The outer coating layer is silicone resin coating layer (the viscosity of the coating material is 3000- 8000cps). Both the inner and the outer coating layers are solidified by ultraviolet. The diameter of the inner coating of the optical fiber is 210µm, and the diameter of the outer coating is 243µm. At room temperature, the attenuation of the optical fiber is 0.34dB/km at 1310nm, and is 0.23dB/km at 1550nm. The screening strength of the optical fiber is 200kpsi. The segment length is greater than 50km, Nd= 22. In an environment of 200 degrees Celsius, the additional attenuation of the optical fiber is less than 0.04dB/km. After being in an environment of 250 degrees Celsius for 7 days, the additional attenuation of the optical fiber is less than 0.05dB/km.

### Example 2

A quartz fiber is a multi-mode fiber having a structure of 50/125µm or 62.5/125µm. The inner coating layer is an acrylic resin coating layer resisting to high temperatures, and the outer coating is a silicone resin coating layer. Both the inner and the outer coating layers are solidified by ultraviolet. The diameter of the inner coating layer of the optical fiber is 210µm, and the diameter of the outer coating layer is 243µm. At room temperature, the attenuation of the optical fiber is 2.41dB/km at 850nm, and is 0.62dB/km at 1300nm. The screening strength of the optical fiber is 100kpsi. The segment length is greater than 10km.

### Example 3

A quartz fiber is a single-mode fiber having a structure of 9/125µm. The inner coating layer is a silicone resin coating layer, and the outer coating layer is a silicone resin coating layer. The coating layer can be solidified by ultraviolet. The diameter of the inner coating layer of the fiber is 200µm, and the diameter of the outer coating layer is 241µm. At room temperature, the attenuation of the optical fiber is 0.35dB/km at 1310nm, and is 0.24dB/km at 1550nm. The screening strength of the optical fiber is 100kpsi. The segment length is greater than 50km. Nd=21. In an environment of 200 degrees Celsius, the additional attenuation of the optical fiber is less than 0.05dB/km. The optical fiber can be used in an environment of 250 degrees Celsius for more than 7 days.

### Comparative Example 1

Comparative example 1 is different from Example 1 in that the outer coating layer is an acrylic resin coating layer (the viscosity of the coating material is 2000-5000cps) resistant to high temperature. Other steps are the same as those of Example 1. The diameter of the coating layer of the optical fiber is 240µm. At room temperature, the attenuation of the optical fiber is 0.32dB/km at 1310nm, and is 0.21dB/km at 1550nm. The screening strength of the optical fiber is 200kpsi. The segment length is greater than 50km. Nd=21.4. In an environment of 150 degrees Celsius, the additional attenuation of the optical fiber is less than 0.05dB/km. But in an environment of 200 degrees Celsius, the additional attenuation value of the optical fiber is greater than 0.05dB/km.

Comparing Example 1 with Comparative Example 1, at high temperatures, the attenuation characteristics of the optical fiber which have two acrylic coating layers are inferior to the attenuation characteristics of the optical fiber which have acrylic and organic silicone coating layers according to the present disclosure. At 200 degrees Celsius, additional attenuation greater than 0.05dB/km is found in comparative Example 1. In the present disclosure, whether the optical fiber has coating layers of acrylic and organic silicon, or has coating layers of organic silicon and organic silicon, when the optical fiber is used at 200 degrees Celsius for a long time, the performance is stable, and the attenuation is low.

In summary, the temperature-resistant optical fiber suitable for high temperature and harsh environment according to the present disclosure has two resin coating layers. The diameter of the finished optical fiber reaches 245µm. The optical fiber can be used at 200 degrees Celsius for a long time, and the performance is stable. The optical fiber can also be used at 250 degrees Celsius for at least 7 days. The temperature-resistant optical fiber of the present disclosure has the screening strength of 100kpsi or 200kpsi. The coating layers are uniform. The segment length can be more than 50km, which allows use of the optical fiber for long distances. The fatigue value Nd of the optical fiber is greater than 20.

The embodiments shown and described above are only examples. Even though numerous characteristics and advantages of the present technology have been set forth in the foregoing description, together with details of the structure and function of the present disclosure, the disclosure is illustrative only, and changes may be made in the detail within the principles of the present disclosure, up to and including the full extent established by the broad general meaning of the terms used in the claims. It will, therefore, be appreciated that the embodiments described above may be modified within the scope of the claims.

## Claims

1. A method for forming optical fiber, **characterized in that**, the method comprises:
melting a fiber preform at 2000 degrees Celsius and above, and drawing the fiber preform into a filament;
cooling the filament to 45 to 55 degrees Celsius;
coating an acrylic resin having a viscosity of 2000 to 5000cps on the cooled filament, which is solidified by ultraviolet to obtain a primary coated filament;
coating an organic silicone resin having a viscosity of 3000 to 8000cps on the primary coated filament, which is solidified by ultraviolet to obtain the optical fiber.

2. The method for forming an optical fiber of claim 1, **characterized in that**, a drawing speed during drawing the fiber preform is 200 to 600 m/min.

3. The method for forming an optical fiber of claim 1, **characterized in that**, the solidifying by ultraviolet comprises polymerizing ultraviolet-initiated resin onto the fiber preform to form a solid coating film that is insoluble and infusible, a time period for solidifying is 0.2 to 0.6s, and an outer diameter of the fiber preform is 40 to 200mm.

4. The method for forming an optical fiber of claim 1, **characterized in that**, after drawing the fiber preform and before cooling, a diameter of the filament is checking for a preset diameter.

5. The method for forming an optical fiber of claim 1, wherein the optical fiber is coiled on an optical fiber tray through an automatic take-up device.

## Patentansprüche

1. Verfahren zur Herstellung von optischen Fasern, **dadurch gekennzeichnet, dass** das Verfahren umfasst:
Schmelzen eines Faservorformlings bei 2000 Grad Celsius und darüber und Ziehen des Faservorformlings zu einem Filament;
Abkühlung des Filaments auf 45 bis 55 Grad Celsius;
Auftragen eines Acrylharzes mit einer Viskosität von 2000 bis 5000 cps auf das abgekühlte Filament, das durch Ultraviolettstrahlung verfestigt wird, um ein primär beschichtetes Filament zu erhalten;
Beschichtung eines organischen Silikonharzes mit einer Viskosität von 3000 bis 8000 cps auf dem primären beschichteten Filament, das durch Ultraviolett verfestigt wird, um die optische Faser zu erhalten.

2. Verfahren zur Herstellung einer optischen Faser nach Anspruch 1, **dadurch gekennzeichnet, dass** die Ziehgeschwindigkeit beim Ziehen der Faservorform 200 bis 600 m/min beträgt.

3. Verfahren zur Herstellung einer optischen Faser nach Anspruch 1, **dadurch gekennzeichnet, dass** die Verfestigung durch Ultraviolettstrahlung die Polymerisierung von ultraviolett initiiertem Harz auf der Faservorform umfasst, um einen festen Beschichtungsfilm zu bilden, der unlöslich und unschmelzbar ist, eine Zeitspanne für die Verfestigung 0,2 bis 0,6 s beträgt und ein Außendurchmesser der Faservorform 40 bis 200 mm beträgt.

4. Verfahren zur Herstellung einer optischen Faser nach Anspruch 1, **dadurch gekennzeichnet, dass** nach dem Ziehen der Faservorform und vor dem Abkühlen der Durchmesser des Filaments auf einen vorgegebenen Durchmesser geprüft wird.

5. Verfahren zur Herstellung einer optischen Faser nach Anspruch 1, wobei die optische Faser durch eine automatische Aufwickelvorrichtung auf eine optische Faserablage aufgewickelt wird.

## Revendications

1. Procédé de formation de fibre optique, **caractérisé par le fait que** le procédé comprend les étapes suivantes :
faire fondre une préforme de fibre à 2 000 degrés Celsius et plus, et étirer la préforme de fibre en un filament ;
refroidir le filament à 45 à 55 degrés Celsius ;
enduire le filament refroidi d'une résine acrylique ayant une viscosité de 2000 à 5000 cps, qui est solidifiée par ultraviolet pour obtenir un filament revêtu primaire ;
enduire une résine de silicone organique ayant une viscosité de 3000 à 8000 cps sur le filament enduit primaire, qui est solidifié par ultraviolet pour obtenir la fibre optique.

2. Procédé de formation d'une fibre optique selon la revendication 1, **caractérisé par le fait que** la vitesse d'étirage pendant l'étirage de la préforme de fibre est de 200 à 600 m/min.

3. Procédé de formation d'une fibre optique selon la revendication 1, **caractérisé par le fait que** la solidification par ultraviolets comprend la polymérisation d'une résine initiée par ultraviolets sur la préforme de fibre pour former un film de revêtement solide qui est insoluble et infusible, une période de temps pour la solidification est de 0,2 à 0,6 s, et un diamètre extérieur de la préforme de fibre est de 40 à 200 mm.

4. Procédé de formation d'une fibre optique selon la revendication 1, **caractérisé par le fait qu'**après étirage de la préforme de fibre et avant refroidissement, un diamètre du filament est vérifié pour un diamètre prédéfini.

5. Procédé de formation d'une fibre optique selon la revendication 1, dans lequel la fibre optique est enroulée sur un plateau de fibre optique via un dispositif de réception automatique.
